(19) Europäisches Patentamt
European Patent Office
Office européen des brevets

(11) EP 1 391 885 A2

(12) EUROPEAN PATENT APPLICATION

(43) Date of publication:
25.02.2004 Bulletin 2004/09

(51) Int Cl.7: G11B 7/24

(21) Application number: 03019192.8

(22) Date of filing: 25.08.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 23.08.2002 JP 2002244051

(71) Applicant: TDK Corporation
Tokyo 103-8272 (JP)

(72) Inventors:
- Horai, Takashi
  Tokyo 103-8272 (JP)
- Tsukamoto, Syuji
  Tokyo 103-8272 (JP)
- Fukuzawa, Narutoshi
  Tokyo 103-8272 (JP)
- Aioka, Hiroyuki
  Tokyo 103-8272 (JP)

(74) Representative: Grünecker, Kinkeldey,
Stockmair & Schwanhäusser Anwaltssozietät
Maximilianstrasse 58
80538 München (DE)

# (54) Optical recording medium

(57) An optical recording medium has at least a substrate, and a recording layer arranged on the substrate. The recording layer contains at least a first dye (main component) which has a maximum absorption wavelength in a range of 450 to 600 nm, and a second dye which has a maximum absorption wavelength in a range of 600 to 750 nm. A content of the second dye in the recording layer is adjusted so that an attenuation coefficient $\alpha$ of the recording layer with respect to a light of a wavelength 655 nm, and an attenuation coefficient $\beta$ of the recording layer with respect to a light of a wavelength 670 nm can simultaneously satisfy conditions represented by the following equations (1) to (3): (1) $0.03 \leq \alpha$ , (2) $0.03 \leq \beta$, (3) $0.7 \leq (\beta/\alpha) \leq 1.05$.

*Fig.3*

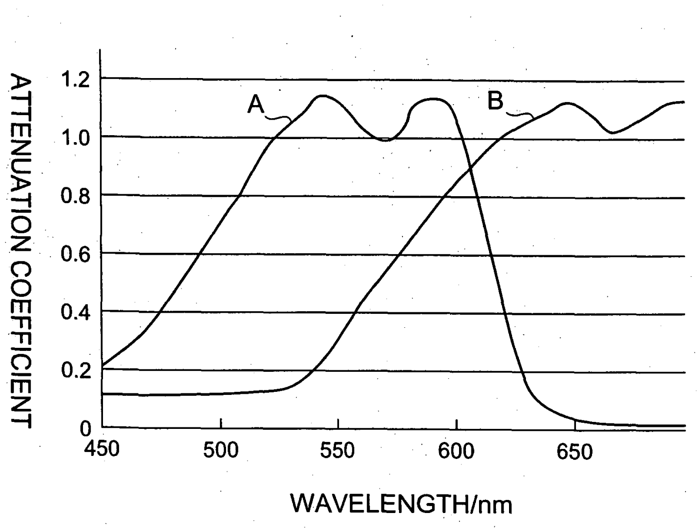


EP 1 391 885 A2

## Description

### BACKGROUND OF THE INVENTION

#### Field of the Invention

The present invention relates to an optical recording medium which has a recording layer containing an organic dye as a main component.

#### Related Background of the Invention

As write-once optical recording media, a medium has been known which has a recording layer containing an organic dye material as a main component, and a medium which has a recording layer containing a metallic element (or nonmetallic element) as a main component. The former is now a mainstream because it provides advantages of an inexpensive price and a relatively simple constitution of a manufacturing process.

In such a write-once optical recording medium which has a recording layer containing an organic dye material as a main component, an oscillation wavelength of a laser beam used for recording is made shorter to enable high-density recording of a great deal of information. In this specification, "a laser oscillation wavelength used for information recording" may be referred to as "a recording wavelength" as appropriate.

Especially, standards have been established in the case of a large capacity write-once optical disk (DVD-R) : a standard of a type in which information is recorded by use of a laser beam of a recording wavelength 635 nm (Authoring) (3.95GB capacity); and a standard of a type in which information is recorded by use of a laser beam of a recording wavelength 650 nm (General) (4.7GB capacity).

Accordingly, a recording layer of the optical disk (DVD-R) is optimized so that best recording properties can be obtained when one of the laser beams of the above two standardized recording wavelengths is used, and thus manufactured.

Such a recording layer of the optical disk (DVD-R) is formed using the following organic dye material, for example.

That is, in order to prevent light absorption intensity of the recording layer from becoming excessively high with respect to a light of a wavelength around 650 nm, the recording layer contains an organic dye as a main component. Here, the organic dye has light absorption properties where a light absorption band is mainly in a range of 450 to 600 nm, and light absorption intensity is of a minimum necessary value with respect to the light of the wavelength in the above range (for example, properties where an attenuation coefficient becomes about 0.01 to 0.03 with respect to the light in the wavelength area of 650 nm).

As examples of organic dyes having such light absorption properties, a cyanine dye described in Japanese Patent Laid-Open Hei 7-266705 or the like, and a dye having an azo group represented by a later-described equation (I) can be given.

These organic dyes have high light resistances and properties where attenuation coefficient is about 0.01 to 0.03 with respect to the light of the oscillation wavelength 650 nm, as described above (see a profile A of an attenuation coefficient of a first dye in Fig. 3 described later).

Thus, by using the above-mentioned organic dye as a main component, it is possible to form a recording layer which has a sufficiently high reflectance (for example, recording layer having a reflectance of about 40% or higher) with respect to a light of a certain wavelength, while keeping a light absorptance necessary for obtaining a sufficient recording sensitivity. Accordingly, it is considered to be possible to obtain a sufficient reproduction sensitivity therein.

### SUMMARY OF THE INVENTION

However, the inventors have discovered the following problems inherent in the aforementioned conventional optical recording medium.

In the above-described conventional optical recording medium, the recording layer is designed to exhibit optimal recording properties when a light of a standardized specific recording wavelength (650 nm) is used. That is, in order to obtain optimal recording properties with respect to the light of the standardized recording wavelength, the recording layer of the conventional optical recording medium is manufactured by selecting an organic dye material having specific optical properties (light absorption properties) like those described above, and by containing the organic dye material as a main component. The optical properties (light absorption properties) of this organic dye material are highly dependent on a light wavelength, and thus even slight fluctuation in the light wavelength greatly changes the optical properties thereof.

Therefore, there has been a problem with the above-described conventional optical recording medium that,

with regard to a laser actually used for recording, even slight deviation of an oscillation wavelength of the laser from the standardized recording wavelength (for example, deviation of even several nm) causes great deterioration in the recording properties thereof.

It is difficult to match the recording wavelength of the laser included in a recorder to record information onto the optical recording medium with the standardized recording wavelength due to influence of dispersion of manufacturing conditions or the like. Thus, the oscillation wavelength of the laser actually used is deviated by at least several nm from the standardized recording wavelength. Therefore, if the conventional optical recording medium is employed for such a recorder, sufficient recording properties cannot be obtained.

In order to simultaneously achieve a low price, a long life and a high output of the laser used for recording, it is considered that a laser having a recording wavelength relatively longer than the above-described standardized recording wavelength may be used. For example, it is considered that a laser having a recording wavelength from around 660 nm to around 680 nm (semiconductor laser, for example) may be used for recording of information. However, there has been a problem that even if the conventional optical recording medium is used for the recorder which has the laser of the recording wavelength longer than around 650 nm like the above-described laser, sufficient recording properties cannot be obtained due to the aforementioned reason.

Moreover, the recording wavelength of the laser included in the recorder tends to be shifted to the longer wavelength side due to temperature increase in a laser beam source during an operation (or to the shorter wavelength side due to temperature decrease). Therefore, also at this point, if the conventional optical recording medium is used, sufficient recording properties cannot be obtained.

The present invention is made with the foregoing problems of the conventional art in mind. It is an object of the present invention to provide an optical recording medium which has excellent recording properties with respect to a light in a relatively wide wavelength area, and is capable of carrying out recording of information well even when a wavelength of a light for recording is deviated from a standardized value.

The inventors have been committed and repeatedly studied to solve the foregoing problems, and discovered that if a certain organic dye is contained in a specific range into the recording layer, it is highly effective for achieving the above object, and thus have reached the present invention. That is to contain an organic dye having a maximum absorption wavelength in a wavelength range of 600 to 750 nm in the recording layer which contains an organic dye as a main component. Here, the organic dye as the main component of the recording layer has a light absorption band mainly in a wavelength range of 450 to 600 nm. The organic dye which has the above maximum absorption wavelength has actually been considered among those skilled in the art not to contribute to improving the recording properties of the recording layer.

The present invention provides an optical recording medium which includes at least a substrate and a recording layer arranged on the substrate. The recording layer contains at least a first dye and a second dye. The first dye is a main component of the recording layer, and a maximum absorption wavelength thereof is in a range of 450 to 600 nm. The second dye has a maximum absorption wavelength in a range of 600 to 750 nm, and an amount of the second dye contained in the recording layer is adjusted so as to simultaneously satisfy the conditions represented by the following equations (1) to (3):

$$0.03 \leq \alpha \tag{1}$$

$$0.03 \leq \beta \tag{2}$$

$$0.7 \leq (\beta/\alpha) \leq 1.05 \tag{3}$$

In the equations (1) to (3), $\alpha$ denotes an attenuation coefficient of the recording layer with respect to a light of a wavelength 655 nm, and $\beta$ denotes an attenuation coefficient of the recording layer with respect to a light of a wavelength 670 nm.

According to the optical recording medium of the present invention, it is possible to obtain excellent recording properties with respect to a light of a wavelength area in a relatively wide range, and to carry out recording of information well even if a recording wavelength is deviated from a standardized value. In particular, according to the optical recording medium of the present invention, it is possible to obtain excellent recording properties with respect to a light of a wavelength in a range of 650 to 680 nm, and to carry out recording of information well even if the recording wavelength is deviated from a standardized value (650 nm) to a longer wavelength side especially in a range of 655 to 680 nm.

A mechanism, where it is possible to obtain the aforementioned effects by containing the second dye in the

range that simultaneously satisfies the conditions represented by the equations (1) to (3), has not become clear yet. However, the inventors have an idea that the mechanism should be as follows.

The inventors think that this is because of the following reason. The conventional recording layer which is made only of the first dye has negative inclination angle where light absorption (or attenuation coefficient) is attenuated from the short wavelength side to the long wavelength side. Meanwhile, in the optical recording medium of the present invention, by adjusting the amount of the second dye contained in the recording layer in the range that simultaneously satisfies the foregoing conditions, the rate of the light absorption (or attenuation coefficient) of the long wavelength side is increased, and thus the degree of attenuation of the light absorptance (or attenuation coefficient) can be sufficiently reduced easily.

Accordingly, the inventors think that, in the optical recording medium of the present invention, the degree of attenuation with regard to the light absorptance (or attenuation coefficient) of the recording layer can be made smaller compared to that of the conventional recording layer. The inventors also think that the light absorptance (or attenuation coefficient) of the recording layer with respect to a light of a wavelength area in a wide range (especially 650 to 680 nm) can be controlled to become a recordable level with a high sensitivity equal to that in the case of the standardized recording wavelength.

According to the present invention, if attenuation coefficients $\alpha$ and $\beta$ of the recording layer are lower than 0.03, it becomes impossible to keep sufficient light absorptance of the recording layer with respect to a recording/reproducing light. Additionally, in order to keep a sufficient reflectance of the recording layer, the attenuation coefficients $\alpha$ and $\beta$ are preferably set equal to/lower than 0.1.

Further, if ($\beta/\alpha$) is lower than 0.7, the aforementioned operation effects cannot be obtained when the recording wavelength is deviated from the standardized value (650 nm). If ($\beta/\alpha$) exceeds 1.05, the aforementioned operation effects cannot be obtained when the recording wavelength is deviated from the standardized value (650 nm).

Moreover, according to the present invention, the "main component" of the recording layer indicates a component which has the highest content rate (mass %) in the recording layer. That is, "the main component" indicates the first dye.

According to the present invention, the "maximum absorption wavelength" of each of the first and second dyes indicates a maximum absorption wavelength of an light absorption spectrum obtained with regard to a thin film formed to a thickness of 30 to 300 μm only by each dye. Thus, it is different from a maximum absorption spectrum of a light absorption spectrum of a solution obtained by dissolving each dye in a solvent.

The light absorption spectrum of each of the first and second dyes can be measured, for example, in the following manner. First, a solution for measurement obtained by dissolving a dye to be measured in an organic solvent at a concentration of 1 to 20 mass % % is prepared. Then, this solution for measurement is coated by a spin coat method on a flat plate (for example, polycarbonate flat plate or the like) having a smooth surface.

At this time, in order to prevent dye molecules in a liquid film of the solution for measurement coated on the flat plate surface from going to a state in which the dye molecules are oriented to a specific direction during drying process, the state of the flat plate surface, the solvent of the coating liquid and coating conditions such as drying time and drying temperature are adjusted. Additionally, the amount of coating of the solution for measurement is adjusted so that a thickness of a film obtained after the drying can be set to 60 to 200 nm. Then, drying is carried out under a temperature condition of 50 to 70°C to form a thin film made of a first or second dye. Then, a transmission absorption spectrum of the flat plate on which the thin film made of the first or second dye is formed is measured by a spectrophotometer.

As an organic solvent used for preparing the above-described solution for measurement, it is preferable to use a solvent in which the first and second dyes can be dissolved, and a boiling point thereof in an atmosphere is 50 to 150°C. Further, it is preferable that the organic solvent does not promote considerable crystallization or association of the first and second dyes when the solvent is evaporated during spin coating of the solution for measurement.

Furthermore, according to the present invention, by using the aforementioned light absorption spectrum measuring method, it is possible to measure the attenuation coefficients (optical constants) of the first and second dyes and the recording layer based on a publicly-known technology.

## BRIEF DESCRIPTION OF THE DRAWINGS

Fig. 1 is a partial cutaway oblique perspective view showing an optical recording medium according to a preferred embodiment of the present invention.

Fig. 2 is an expanded oblique perspective view of a portion represented by a section R of the optical disk shown in Fig. 1.

Fig. 3 is a graph showing an example of a relation between a wavelength of a light irradiated on a recording layer of the optical recording medium of the present invention and attenuation coefficients of a first and a second dyes contained in the recording layer.

Fig. 4 is a graph showing a relation between a wavelength of a light irradiated on each of the recording layers of optical recording media of Example 3 and Comparative Example 1 and an attenuation coefficient of the recording layer.

Fig. 5 is a graph showing a part of the graph of Fig. 4 enlarged with regard to a wavelength area of 650 to 770 nm.

DESCRIPTION OF THE PREFERRED EMBODIMENTS

Next, detailed description will be made with regard to a preferred embodiment of an optical recording medium with reference to Figs. 1 and 2.

Fig. 1 is a partial cutaway oblique perspective view showing an optical recording medium (DVD-R) according to a preferred embodiment of the present invention. Fig. 2 is an expanded oblique perspective view of a portion represented by a section R of an optical disk shown in Fig. 1.

As shown in Fig. 2, the optical recoding medium 1 of Fig. 1 is constituted by bonding a disk 20 used for recording to a dummy substrate 30 by an adhesive layer 40 made of adhesive. The disk 20 includes a substrate 22, a protective layer 28, a recording layer 24 arranged between the substrate 22 and the protective layer 28, and a reflective layer 26 arranged between the protective layer 28 and the recording layer 24.

The substrate 22 is a layer to serve as a support for the recording layer 24, the reflective layer 26 and the protective layer 28. There is no particular limitation on a material to form the substrate 22 as long as the material can transmit a recording light and a reproducing light while supporting the above respective layers. It is preferable, however, that a transmittance of the lights (for example, laser beam having an oscillation wavelength in a range of 650 to 680 nm) is 88% or higher. As such a material, glass or resin can be used, for example. The resin is more preferable in terms of easiness of molding.

For such resin, polycarbonate resin, acrylic resin, epoxy resin, polystyrene resin, polyethylene resin, polypropylene resin, urethane resin or the like can be given as examples.Among these, the polycarbonate resin is particularly preferable in terms of processability and optical properties thereof. Additionally, there is no particular limitation on a thickness of the substrate 22, which can be set to about 0.6 mm, for example.

Furthermore, a tracking servo groove (recessed part) 11 and a land (projected part) 12 necessary for recording of information are formed on a surface of the side of the substrate 22 where the recording layer 24 is formed. A shape of this guiding groove structure, a depth of the groove and a track pitch are optimized in consideration of a total signal quality including recording/reproducing properties, servo signal properties, and the like.

The recording layer 24 is a layer on which a recording mark is formed during recording. The following constitution is employed therein in order to obtain good recording properties with respect to a light in a relatively wide ranging wavelength area (especially, wavelength 650 to 680 nm), and to carry out recording of information well even when the wavelength of the recording light is deviated from the standardized value (650 nm) (especially, when shifted to a longer wavelength side of 655 to 680 nm),

That is, the recording layer 24 contains at least a first dye (main component) having a maximum absorption wavelength set in a range of 450 to 600 nm, and a second dye having a maximum absorption wavelength set in a range of 600 to 750 nm. Moreover, as described above, an amount of the second dye contained in the recording layer 24 is adjusted so as to simultaneously satisfy the conditions represented by the following equations (1) to (3):

$$0.03 \leq \alpha \quad (1)$$

$$0.03 \leq \beta \quad (2)$$

$$0.7 \leq (\beta/\alpha) \leq 1.05 \quad (3)$$

In the equations (1) to (3), $\alpha$ denotes an attenuation coefficient of the recording layer with respect to a light of a wavelength 655 nm, and $\beta$ denotes an attenuation coefficient of the recording layer with respect to a light of a wavelength 670 nm.

In order to surely obtain a sufficient recording sensitivity even when a recording wavelength is deviated from a standardized value, it is preferable for the recording layer 24 that the aforementioned conditions are simultaneously satisfied and an attenuation coefficient is set in a range of 0.03 to 0.1 with respect to a light of a wavelength 655 to 670 nm.

When the attenuation coefficient of the recording layer 24 with respect to the light of the wavelength 655 to

670 nm becomes less than 0.03, a sufficient recording sensitivity cannot be obtained, thereby increasing a tendency of a deterioration of recording properties. The larger the dispersion in attenuation coefficients of the recording layer 24 becomes, the larger a recording sensitivity difference in the wavelength area of 655 to 670 nm becomes. Thus, the recording properties increasingly tend to greatly deviate because of recording wavelength deviation. Therefore, the attenuation coefficient with respect to the light of the wavelength 655 to 670 nm should preferably be set in the aforementioned range.

Meanwhile, when the attenuation coefficient of the recording layer 24 with respect to the light of the wavelength 655 to 670 nm exceeds 0.1, because the light absorptance becomes excessively large, there is an increasing tendency that it is impossible to obtain sufficient reflectance. Further, in order to obtain the aforementioned operation effects more surely, a thickness of the recording layer 24 should preferably be set in a range of 30 to 300 nm.

Next, description will be made with regard to the first and second dyes used as materials to constitute the recording layer 24 having the aforementioned optical properties. Fig. 3 is a graph showing an example of a relation between a wavelength of a light irradiated on the recording layer of the optical recording medium of the present invention and attenuation coefficients of the first and second dyes contained in the recording layer. In Fig. 3, an attenuation coefficient profile A shows an example of an attenuation coefficient profile of the first dye used in the present invention, and an attenuation coefficient profile B shows an example of an attenuation coefficient profile of the second dye used in the present invention.

In order to obtain optical properties of the recording layer 24 more surely, it is preferable that a maximum absorption wavelength of the first dye which is a main component of the recording layer 24 is in a range of 450 to 600 nm, and an attenuation coefficient thereof with respect to the light of the maximum absorption wavelength is equal to/higher than 0.7. Additionally, for the same purpose, an attenuation coefficient of the first dye with respect to a light of a wavelength 680 nm is preferably equal to/lower than 0.03.

In order to obtain optical properties of the recording layer 24 more surely, it is preferable that a maximum absorption wavelength of the second dye is in a range of 600 to 750 nm, and an attenuation coefficient with respect to a light of a wavelength used for recording of information is equal to/higher than 0.5. Additionally, for the same purpose, an attenuation coefficient of the second dye with respect to a light of a wavelength 650 to 680 nm is preferably equal to/higher than 0.5.

Further, in order to obtain optical properties of the recording layer 24 more surely, an amount of the second dye contained in the recording layer 24 is preferably equal to/lower than 10 mass % with respect to total mass of the recording layer 24. If the amount of the second dye contained in the recording layer 24 exceeds 10 mass %, a tendency that adversely affects recording properties (errors or jitters) of the first dye is increased.

Next, examples of the first dye and the second dye which are used as a component of the recording layer 24 having the optical properties mentioned above are described.

Preferably the first dye at least has a coordination center made of metal or metal ion and a ligand which is represented by a general formula (I).

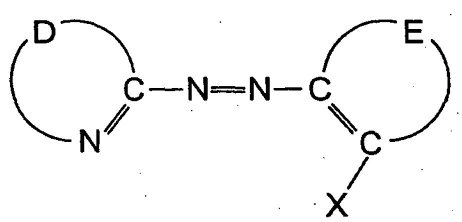

···( I )

Herein in the general formula (I), D represents a divalent residue which forms a heterocyclic ring or a condensed ring which contains the heterocyclic ring which a nitrogen atom or a carbon atom which bonds to the nitrogen atom bonds to form, E represents a divalent residue which bonds to each of the carbon atoms bonded together, X represents a hydroxyl group, carboxyl group , sulfonic acid group , sulfonic acid derivatives group or a characteristic group shown by - $NSO_2Q$, wherein Q means an alkyl group having 1 to 6 carbons which has atoms at least one hydrogen atom which may be substituted by a halogen atom.

Note that the above-mentioned "sulfonic acid derivative group" means a group having the structure that a hydrogen atom in the sulfonic acid group is substituted by a monovalent metal atom.

Though in the formula (I), the metal located at the coordination center for ligands has no limitation as far as the ligand represented by formula (I) may coordinate to the metal, $Ni^{2+}$, $Co^{2+}$ or $Cu^{2+}$ is preferable. The ligand represented by formula (I) is preferably represented by following general formulae (III) to (VI).

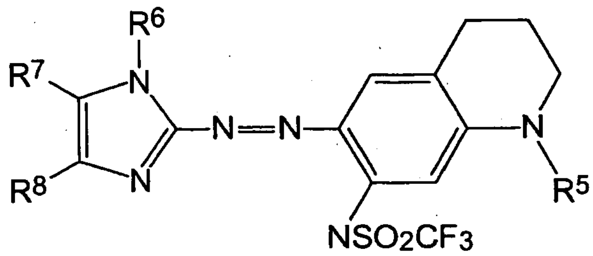

···(III)

Herein in the formula (III), $R^5$ and $R^6$ may be identical with or different from each other and independently represent alkyl groups having 1 to 4 carbon atoms, $R^7$ and $R^8$ may be identical with or different from each other and independently express a nitrile group or carboxylic acid ester group. The groups expressed by $-COOCH_3$, $-COOC_2H_5$ or $-COOC_3H_7$ are suitable as the carboxylic acid ester group.

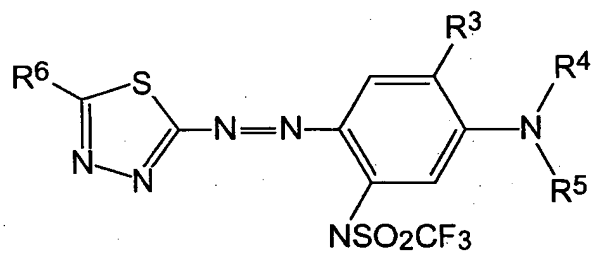

···(IV)

Herein in the formula (IV), $R^3$ represents a hydrogen atom or an alkoxy group having 1 to 3 carbon atoms, and $R^4$, $R^5$ and $R^6$ may be identical with or different from each other and independently represents alkyl groups having 1 to 4 carbon atoms.

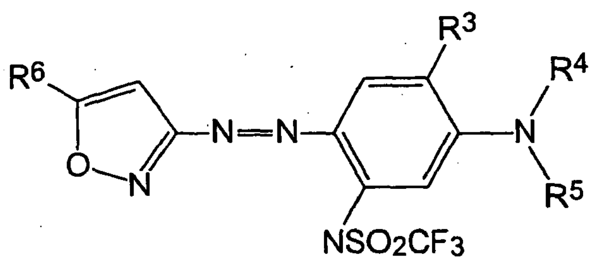

···(V)

Herein $R^3$, $R^4$, $R^5$ and $R^6$ used in formula (V) denote the same meaning of $R^3$, $R^4$, $R^5$ and $R^6$ in the formula (IV).

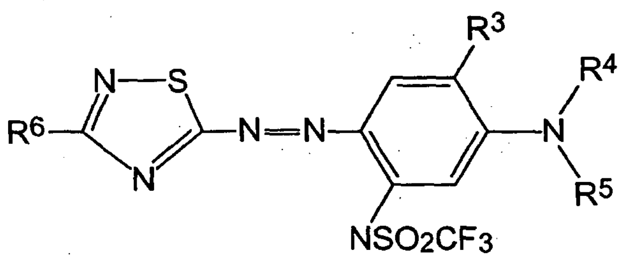

···(VI)

Herein $R^3$, $R^4$, $R^5$ and $R^6$ used in formula (VI) denote the same meaning of $R^3$, $R^4$, $R^5$ and $R^6$ in the formula

(IV) .

Furthermore, the first preferable dye is formed by the ligands represented by above formulae (III) to (VI) and metal or metal ion. Examples are the dyes expressed by the following formulae (A1) and (A2).

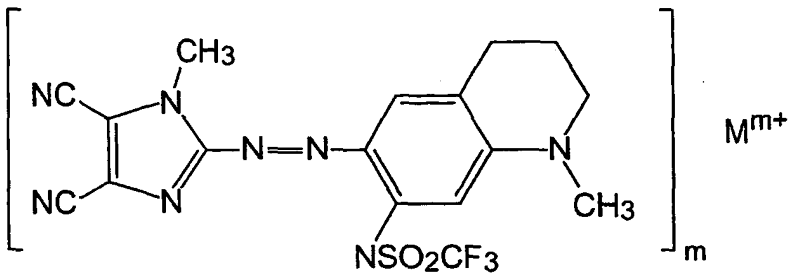

···(A1)

Herein, in the formula (A1), M represents $Ni^{2+}$, $Co^{2+}$ or $Cu^{2+}$, and m represents the valence of M.

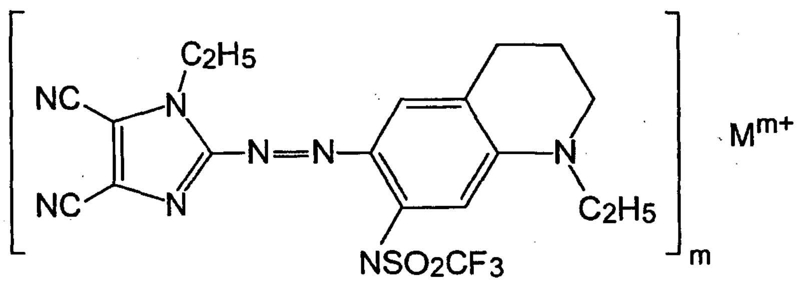

···(A2)

Herein M and m used in the formula (A2) denote the same meaning of M and m in formula (A1).

Furthermore, the second dye is preferably a cyanine dye represented by a general formula (II).

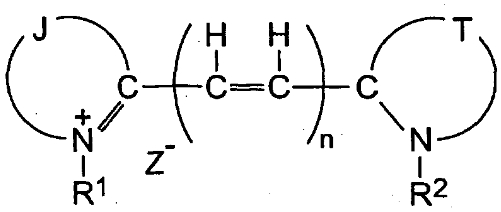

···(II)

Herein in the general formula (II), J represents a divalent residue which forms the condensed ring by bonding each of a nitrogen atom and a carbon atom which bonds to the nitrogen atom, T represents a divalent residue which forms a condensed ring by bonding each of a nitrogen atom and a carbon atom which bonds to the nitrogen atom. Wherein J and T may be identical with or different from each other, $R^1$ and $R^2$ may be identical with or different from each other, independently represent an alkyl group having 1 to 6 carbon atoms which at least one hydrogen atom may be substituted with other functional groups, or an alkenyl group having 1 to 6 carbon atoms which at least one hydrogen atom may be substituted with other functional groups. Z represents an atom or an atomic group which may form an monovalent anion, and n represents an integer of 2 or 3.

More preferably the cyanine dyes represented by the general formula (II) include the cyanine dyes expressed by the following general formula (VII) or (VIII).

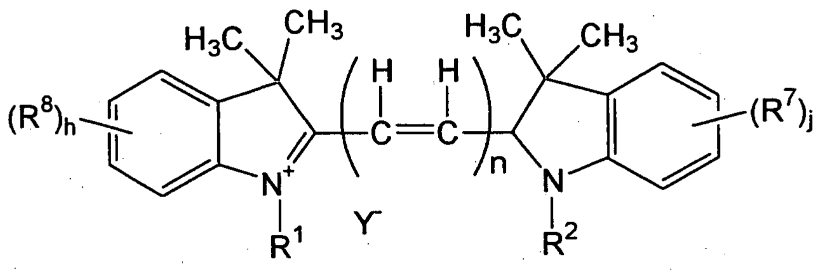

· · · (VII)

Herein $R^1$, $R^2$ and n of the formula (VII) each have the same meaning of $R^1$, $R^2$ and n of the formula (II), and j of the formula (VII) means the integer of 1 to 4 and $R^7$ represents a hydrogen atom, halogen atom, nitro group, or hydrocarbon group. In the case of j=2, two $R^7$'s may bond each other to form a condensed ring including a 5 or 6-membered ring. Furthermore h of the formula (VII) means the integer of 1 to 4, $R^8$ represents a hydrogen atom, halogen atom, nitro group or hydrocarbon group. In the case of h=2, two $R^8$'s may bond each other to form a condensed ring including 5 or 6-membered ring. $Y^-$ of the formula (VII) represents a halide compound ion, for example, $BF_4^-$, $PF_6^-$ or $ClO_4^-$.

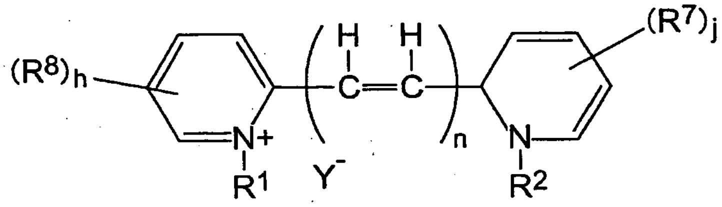

· · · (VIII)

Herein $R^1$, $R^2$ and n of the formula (VIII) have each the same meaning of $R^1$, $R^2$ and n of the formula (II), and j, $R^7$, h, $R^8$ and Y of the formula (VIII) each have the same meaning of j, $R^7$, h, $R^8$ and Y of the formula (VII). Therefore, in the case of j=2, two $R^{7'}$ s may bond each other to form a condensed ring including 5 or 6-membered ring, and in the case of h=2, two $R^8$'s may bond each other to form a condensed ring including 5 or 6 membered ring.

Examples of the second preferable dye represented by the general formula (VII) or (VIII) is exemplified as following compounds expressed by formulae (B1) to (B8) . Herein each of $Y^-$ in formulae (B1) to (B8) has the same meaning as in (VII).

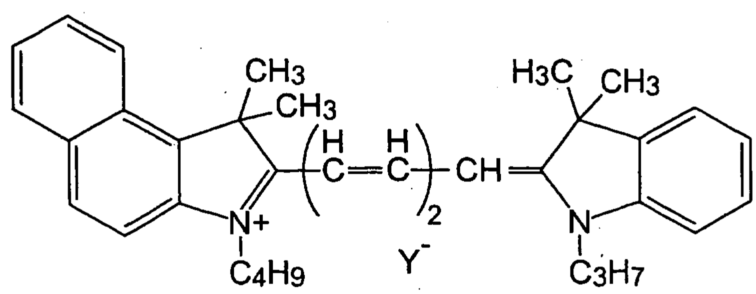

· · · (B1)

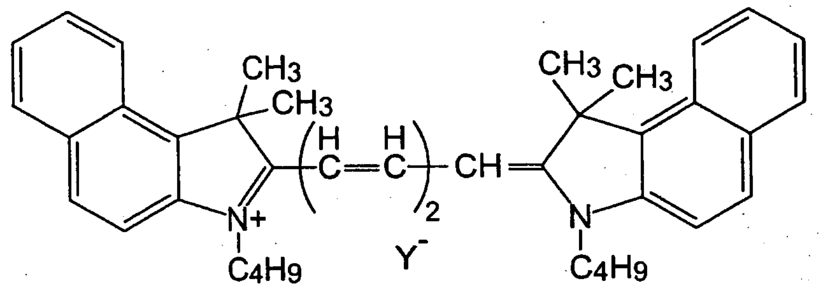

··· (B2)

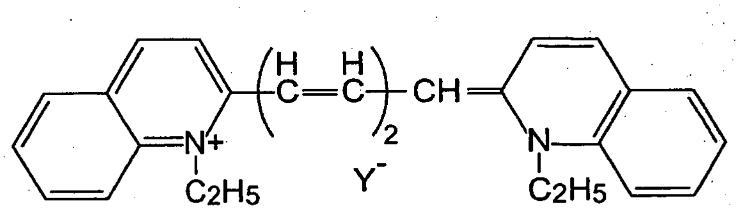

··· (B3)

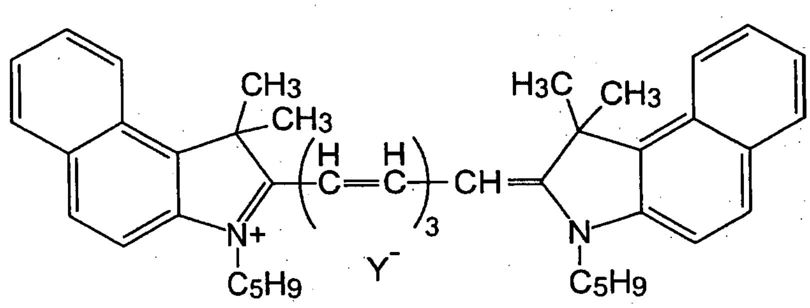

··· (B4)

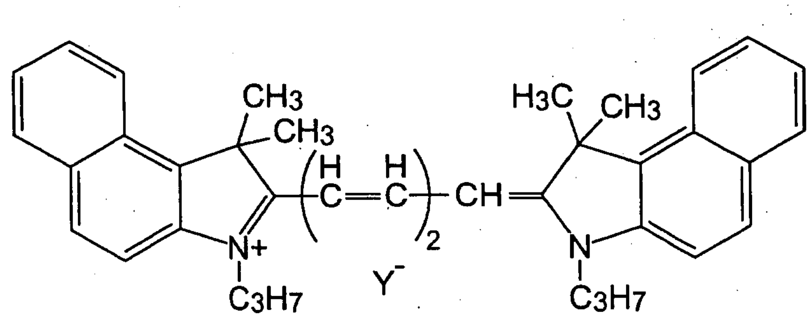

··· (B5)

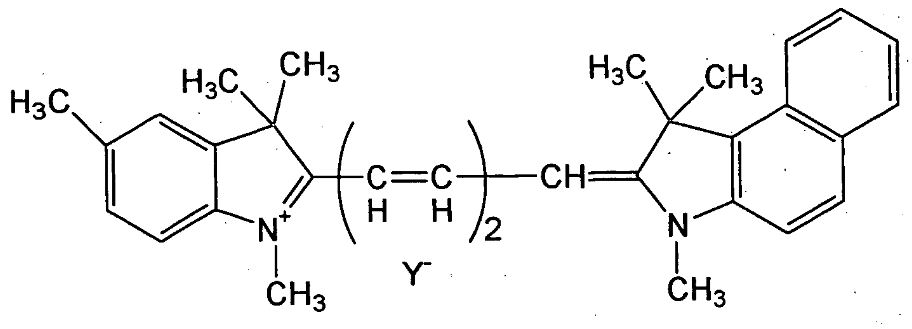

··· (B6)

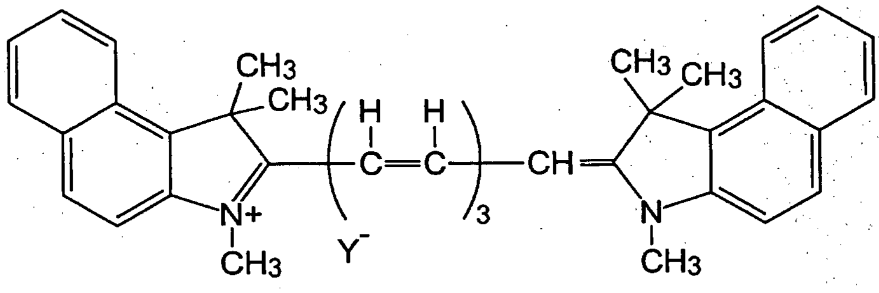

··· (B7)

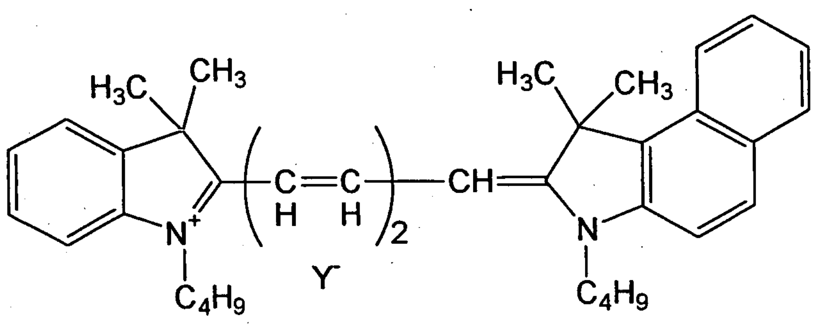

··· (B8)

The reflective layer 26 is a layer which is disposed to facilitate acquisition of a high reproduction signal (C/N ratio) by multiple interference effects when a reproducing light is incidented after optical recording on the recording layer 24. No particular limitation is set with regard to materials to constitute the reflective layer 26 as long as a light can be reflected. For example, Mg, Al, Ti, Cr, Fe, Co, Ni, Cu, Zn, Ge, Ag, Pt, Au or the like, or an alloy made by arbitrarily combining these can be used. A thickness of the reflective layer 26 is preferably equal to/thicker than 50 nm.

The protective layer 28 is a layer to protect the recording layer 24 from damaging when the optical recording medium 1 is manufactured, used or stored. No particular limitation is set with regard to a material to constitute the protective layer 28, and the same material as that for a publicly-known optical recording medium may be used. For example, a film formed by curing ultraviolet curing resin can be used. There is no particular limitation, but a thickness of the protective layer 28 is preferably in a range of 0.5 to 100 μm.

The adhesive layer 40 bonds the dummy substrate 30 and the disk 20 to each other. No particular limitation is set with regard to a material to constitute the adhesive layer 40, and the same material as that for the publicly-known optical recording medium can be used. For example, a material such as ultraviolet curing resin or thermosetting resin can be arbitrarily selected. A thickness of the adhesive layer 40 is set in a range of about 10 to 200 μm.

The dummy substrate 30 has a thickness substantially equal to that of the substrate 22, and is disposed to support the substrate 22. No particular limitation is set on a constitution of the dummy substrate 30. For example, it is acceptable if the dummy substrate 30 has the same constitution as that of the dummy substrate used in the publicly-known optical recording medium.

Next, a manufacturing method of the optical recording medium 1 will be described. In the manufacturing method of the optical recording medium 1, an optical recording medium can be manufactured by use of a publicly-known thin film manufacturing technology, except for that the first and second dyes to be constituent materials are selected, and that a blending ratio thereof is further adjusted in order for the recording layer 24 to obtain the foregoing optical properties after formation.

For example, when the recording layer 24 is formed on the substrate 22, the recording layer 24 can be usually formed by coating a solution, the solution which is obtained by dissolving an organic dye and various additives as needed in a solvent, on a transparent substrate by use of a spin coat method.

As a method for forming the reflective layer 26 on the recording layer 24, for example, a vapor growth method which uses chemical species including constituent elements of the reflective layer 26 can be used. As such a vapor growth method, for example, a vacuum deposition method, a sputtering method and the like are applicable.

Next, as for a method for forming the protective layer 28 on the reflective layer 26, the protective layer can be formed by coating an acrylic or epoxy ultraviolet curing resin on the reflective layer 26 by use of the spin coat method or the like, for example. Thus, the disk 20 of the optical recording medium 1 can be manufactured. Then, the disk 20 and the separately prepared dummy substrate 30 are bonded together as shown in Fig. 2 by use of an adhesive which is a raw material for the adhesive layer 40, and thus the manufacturing of the optical recording medium 1 is completed.

The manufacturing method of the optical recording medium 1 is not limited to the above method and, as described above, the thin film manufacturing technology employed for manufacturing the publicly-known optical recording medium can be used.

Next, description will be made with regard to an example of an optical recording method where the optical recording medium 1 is used.

First, when information is recorded (or added) on the optical recording medium 1, a light L1 for recording is irradiated in pulses from the substrate 22 side toward the recording layer 24, and an optical reflectance in the irradiated portion of the recording layer 24 is thereby changed to record information.

More specifically, the portion of the recording layer 24 irradiated with the light L1 for recording absorbs the light and thereby the organic dye is decomposed/altered, and thus optical properties of the irradiated portion change. That is, a recording mark is formed on the irradiated portion. At this time, by the deformation of the irradiated portion of the recording layer 24, the portion of the surrounding substrate 22 is also deformed, and contributes to the formation of the recording mark.

After the optical recording, a light L1 for reproducing is irradiated from the substrate 22 side toward the recording layer 24, and thereby a difference in reflectance between the portion of the recording mark formed on the irradiated portion of the recording layer 24 and the other portion of the recording layer 24 is detected, and thus the recorded information can be reproduced.

In this case, the amount of the second dye contained in the recording layer 24 is adjusted so that the optical properties thereof can simultaneously satisfy conditions represented by the equations (1) to (3). Thus, even if a wavelength (recording wavelength) of the light L1 is deviated from the standardized value (650 nm) during recording of information, or even if the recording wavelength is deviated from the standardized value by fluctuation in a temperature of the light source of the light L1 during recording of information, it is possible to carry out recording of information well. Additionally, even if the recording wavelength is intentionally set in the range of 655 to 680 nm, it is possible to carry out information recording well as the above.

The preferred embodiment of the present invention has been heretofore described, but the invention is not limited to the above-described embodiment.

For example, in the above embodiment, the optical recording medium which has a constitution including the protective layer 28 is described. However, the optical recording medium of the present invention is not limited to this. For example, if the adhesive layer 40 includes a function of the protective layer 28, a constitution is applicable where the protective layer 28 is not disposed.

For example, in the above embodiment, the optical recording medium which has a constitution where the dummy substrate 30 shown in Fig. 2 is used is described. However, the optical recording medium of the present invention is not limited to this. For example, in place of the dummy substrate 30, the optical recording medium may have a construction where two disks 20 are joined by the adhesive layer 40 (provided that they are joined in a state where portions of the protective layers 28 of each disk are facing each other).

Further more, the first dye according to the present invention may be a compound formed by a ligand having a different structure expressed in the formula (I) and metal or metal ion. For example, the compounds having following formula (A3) to (A7) may be used.

From the viewpoint of the enough operation and effects of the present invention, the dyes having the structure expressed by the formulae by (A3) to (A6) are preferably used together with the dyes having the structure expressed by (A1) or (A2). In this case, it is recommended that the content (mass %) of the dyes having the structure expressed by the formula (A1) or (A2) is larger than that of the dyes having the structure expressed by the formula (A3) to (A6) in the recording layer.

Any of the dyes having the structure expressed by the formulas (A3) to (A6) are different from the second

dye because of the wavelength of maximum absorption thereof ranging from 450 to 600 nm which corresponds to the case of n=1 in the aforementioned formula (II).

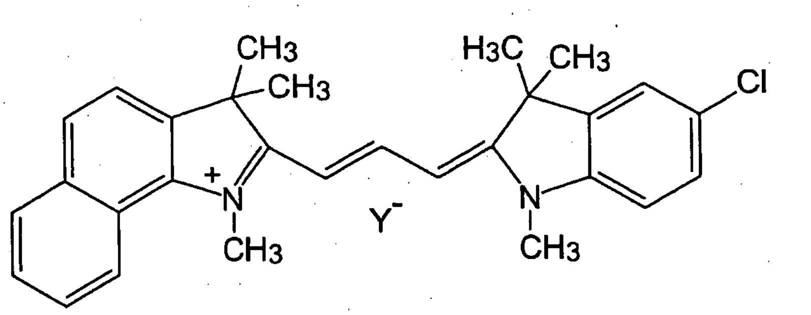

... (A3)

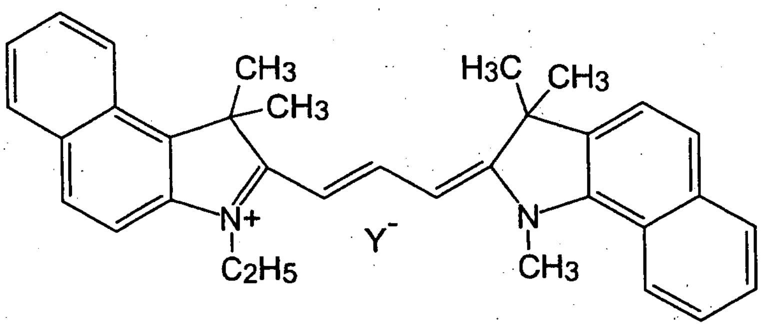

... (A4)

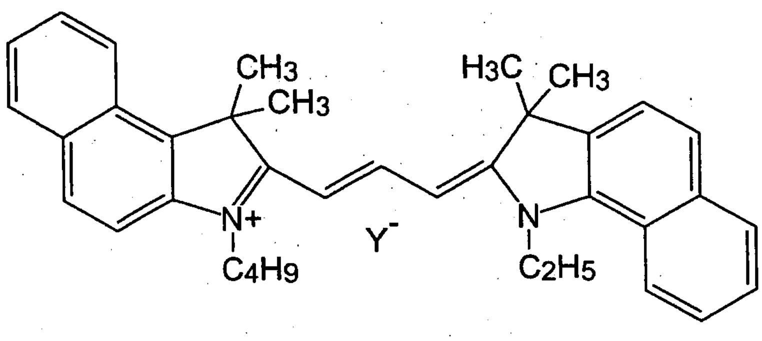

... (A5)

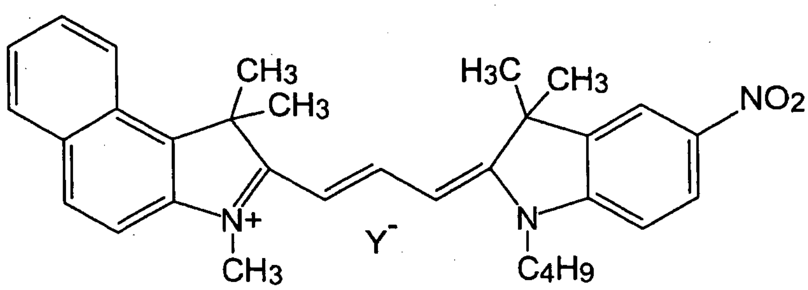

... (A6)

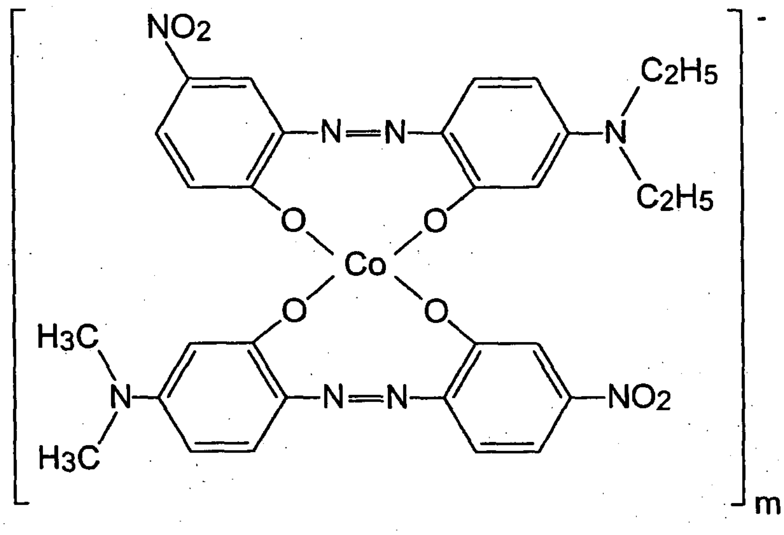 $M^{m+}$ ···(A7)

Further more, the second dye used in the present invention may be a dye having a different structure from the cyanine dyes expressed by the formula (II). For example, a dye expressed by the formula (B9) below is available. It should be noted that $Y^-$ in the formula (B9) below has the same meaning of $Y^-$ in the aforementioned formula (VII).

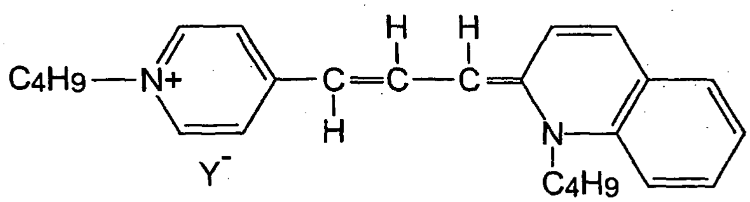 ···(B9)

[EXAMPLE]

The present invention will be more precisely described by using the following Examples, but should not be limited only to the examples.

With regard to the optical recording media (DVD-R) from Example 1 to Example 10 and from Comparative Example 1 to Comparative Example 4, the contents (mass %)of the first dye and the second dye included in the recording layer, and an attenuation coefficient α, another attenuation coefficient β obtained for the optical recording layer, and the ratio (β/α).

(Example 1)

An optical recording medium (DVD-R) having the same composition of the optical recording medium 1 shown in the Figure 1 was prepared using the following procedures.

A polycarbonate substrate (thickness: 0.6 mm, diameter: 120 mm), on which a groove (depth: 0.18 μm, half-width: 0.30 μm) and land (height: 0.18 μm, half-width: 0.44 μm) so as to form the track pitch (the center-to-center distance between grooves) of 0.74 μm were formed on the one side of the substrate, was prepared.

Then an organic solvent solution of the first dye and the second dye were prepared to be in the total dyes' concentration of 1.0 mass%, wherein 2, 2, 3, 3-tetrafloropropanol was used as the solvent and the dye having M=Ni, m=2 in the formula (A1) was used as the first dye and the dye having $Y^-=ClO_4^-$ in the formula (B1) was used as the second dye. The solution was coated on the side of the substrate on which the groove and land had been formed and dried by using spin-coating technique. Thus, the recording layer (thickness: 90 nm) was formed. Note that the contents of the first dye and the second dye in the recording layer were adjusted as shown in Table 1.

Then the substrate having the recording layer was set in a sputtering machine and a reflection layer made of

Ag (thickness: 100 nm) was formed. Next, the ultraviolet-curable acrylic resin (Daicure Clear SD318, Dainippon Ink and Chemicals Inc.) was coated on the reflection layer using spin-coating technique to form a protection layer (thickness: 10 (μm) using the irradiation of UV light. Thus, the disk corresponded to the disc 20 is obtained.

Then, after the disk being adhered to a dummy substrate made of polycarbonate (thickness: 0.6 mm) by use of a slow acting cationic polymerization adhesive ("SK7000", Sony Chemicals Co., Ltd.), the optical recording medium was completed. It should be noted that the thickness of the adhesive layer was 0.45 μm.

Next, the light absorption spectra of the recording layer of the optical recording medium in Example 1 were measured. According to these results, the attenuation coefficient α, the attenuation coefficient β and the ratio (β/α) were determined depending on the equations (1) through (3). The results are shown in Table 1.

(Example 2)

An optical recording medium was prepared as follows. The dye having M=Ni, m=2 in the formula (A1) was used as the first dye. The dye having $Y^-=ClO_4^-$ in the formula (B1) was used as the second dye.The contents of these dyes were changed as shown in Table 1. Except for these, the manner used in Example 1 was applied. Moreover, the light absorption spectra of the recording layer in Example 2 were measured. According to these results, the attenuation coefficient α, the attenuation coefficient β and the ratio (β/α) were determined depending on the equations (1) through (3). The results are shown in Table 1.

(Example 3)

An optical recording medium was prepared as follows. The dye having M=Ni, m=2 in the formula (A1) was used as the first dye. The dye having $Y^-=ClO_4^-$ in the formula (B1) and the dye having $Y^-=ClO_4^-$ in the formula (B2) were used as the second dye. The contents of these dyes were changed as shown in Table 1. Except for these, the manner used in Example 1 was applied. Moreover, the light absorption spectra of the recording layer in Example 3 were measured. According to these results, the attenuation coefficient α, the attenuation coefficient β and the ratio (β/α) were determined depending on the equations (1) through (3). The results are shown in Table 1.

(Example 4)

An optical recording medium was prepared as follows. The dye having M=Ni, m=2 in the formula (A1) and the dye having $Y^-=I^-$ in the formula (A3) were used as the first dye, the dye having $Y^-=ClO_4^-$ in the formula (B2) was used as the second dye, and the contents of these dyes were changed as shown in Table 1. Except for these, the manner used in Example 1 was applied. Moreover, the light absorption spectra of the recording layer in Example 3 were measured. According to these results, the attenuation coefficient α, the attenuation coefficient β and the ratio (β/α) were determined depending on the equations (1) through (3). The results are shown in Table 1.

(Example 5)

An optical recording medium was prepared as follows. The dye having M=Ni, m=2 in the formula (A1) was used as the first dye, the dye having $Y^-=I^-$ in the formula (B3) was used as the second dye, and the contents of these dyes were changed as shown in Table 1. Except for these, the manner used in Example 1 was applied. Moreover, the light absorption spectra of the recording layer in Example 3 were measured. According to these results, the attenuation coefficient α, the attenuation coefficient β and the ratio (β/α) were determined depending on the equations (1) through (3). The results are shown in Table 1.

(Example 6)

An optical recording medium was prepared as follows. The dye having M=Ni, m=2 in the formula (A1) was used as the first dye, the dye having $Y^-=PF_6^-$ in the formula (B4) was used as the second dye, and the contents of these dyes were changed as shown in Table 1. Except for these, the manner used in Example 1 was applied. Moreover, the light absorption spectra of the recording layer in Example 3 were measured. According to these results, the attenuation coefficient α, the attenuation coefficient β and the ratio (β/α) were determined depending on the equations (1) through (3). The results are shown in Table 1.

(Example 7)

An optical recording medium was prepared as follows. The dye having M=Ni, m=2 in the formula (A1) was

used as the first dye, the dye having $Y^-=BF_4^-$ in the formula (B5) was used as the second dye, and the contents of these dyes were changed as shown in Table 1. Except for these, the manner used in Example 1 was applied. Moreover, the light absorption spectra of the recording layer in Example 3 were measured. According to these results, the attenuation coefficient $\alpha$, the attenuation coefficient $\beta$ and the ratio ($\beta/\alpha$) were determined depending on the equations (1) through (3). The results are shown in Table 1.

(Example 8)

An optical recording medium was prepared as follows. The dye having M=Ni, m=2 in the formula (A1) was used as the first dye, the dye having $Y^-=BF_4^-$ in the formula (B6) was used as the second dye, and the contents of these dyes were changed as shown in Table 1. Except for these, the manner used in Example 1 was applied. Moreover, the light absorption spectra of the recording layer in Example 3 were measured. According to these results, the attenuation coefficient $\alpha$, the attenuation coefficient $\beta$ and the ratio ($\beta/\alpha$) were determined depending on the equations (1) through (3). The results are shown in Table 1.

(EXAMPLE 9)

An optical recording medium was prepared as follows. The dye having M=Ni, m=2 in the formula (A1) was used as the first dye, the dye having $Y^-=PF_6^-$ in the formula (B1) was used as the second dye, and the contents of these dyes were changed as shown in Table 1. Except for these, the manner used in Example 1 was applied. Moreover, the light absorption spectra of the recording layer in Example 3 were measured. According to these results, the attenuation coefficient $\alpha$, the attenuation coefficient $\beta$ and the ratio ($\beta/\alpha$) were determined depending on the equations (1) through (3). The results are shown in Table 1.

(EXAMPLE 10)

An optical recording medium was prepared as follows. The dye having M=Ni, m=2 in the formula (A1) and the dye having $Y^-=I^-$ in the formula (A3) was used as the first dyes, the dye having $Y^-=ClO_4^-$ in the formula (B1) and the dye having $Y^-=ClO_4^-$ in the formula (B2) was used as the second dyes, and the contents of these dyes were changed as shown in Table 1. Except for these, the manner used in Example 1 was applied. Moreover, the light absorption spectra of the recording layer in Example 3 were measured. According to these results, the attenuation coefficient $\alpha$, the attenuation coefficient $\beta$ and the ratio ($\beta/\alpha$) were determined depending on the equations (1) through (3). The results are shown in Table 1.

(Comparative example 1)

An optical recording medium was prepared as follows. Only the dye having M=Ni, m=2 in the formula (A1) was used as the first dye, and the content of this dye was changed as shown in Table 1. Except for these, the manner in Example 1 was applied. Note that the recording layer of the optical medium of Comparative example 1 includes only the first dye. Moreover, the light absorption spectra of the recording layer in Comparative example 1 were measured. According to these results, the attenuation coefficient $\alpha$, the attenuation coefficient $\beta$ and the ratio ($\beta/\alpha$) were determined depending on the equations (1) through (3). The results are shown in Table 1.

(Comparative example 2)

An optical recording medium was prepared, as follows. The dye having M=Ni, m=2 in the formula (A1) and the dye having $Y^-=I^-$ in the formula (A3) were used as the first dyes, the contents of these dyes were changed as shown in Table 1. Except for these, the manner in Example 1 was applied. Note that the recording layer of the optical medium of Comparative example 2 includes only the first dye. The light absorption spectra of the recording layer in Comparative example 2 were measured. According to these results, the attenuation coefficient $\alpha$, the attenuation coefficient $\beta$ and the ratio ($\beta/\alpha$) were determined depending on the equations (1) through (3). The results are shown in Table 1.

(Comparative example 3)

An optical recording medium was prepared as follows. The dye having M=Ni, m=2 in the formula (A1) and the dye having $Y^-=ClO_4^-$ in the formula (A4) were used as the first dyes, and the contents of these dyes were changed as shown in Table 1. Except for these, the manner in Example 1 was applied. Note that the recording layer of the optical medium of Comparative example 3 includes only the first dye. Moreover, the light absorption spectra of the recording

layer in Comparative example 3 were measured. According to these results, the attenuation coefficient α, the attenuation coefficient β and the ratio (β/α) were determined depending on the equations (1) through (3). The results are shown in Table 1.

(Comparative example 4)

An optical recording medium was prepared as follows. The dye having M=Ni, m=2 in the formula (A1) and the dye having $Y^-=PF_6^-$ in the formula (A5) were used as the first dyes, and the contents of these dyes were changed as shown in Table 1. Except for these, the manner in Example 1 was applied. Note that the recording layer of the optical medium of Comparative example 4 includes only the first dye. Moreover, the light absorption spectra of the recording layer in Comparative example 4 were measured. According to these results, the attenuation coefficient α, the attenuation coefficient β and the ratio (β/α) were determined depending on the equations (1) through (3). The results are shown in Table 1.

(Comparative example 5)

An optical recording medium was prepared as follows. The dye having M=Ni, m=2 in the formula (A1) and the dye having $Y^-=ClO_4^-$ in the formula (A6) were used as the first dyes, and the contents of these dyes were changed as shown in Table 1. Except for these, the manner in Example 1 was applied. Note that the recording layer of the optical medium of Comparative example 4 includes only the first dye. Moreover, the light absorption spectra of the recording layer in Comparative example 4 were measured. According to these results, the attenuation coefficient α, the attenuation coefficient β and the ratio (β/α) were determined depending on the equations (1) through (3). The results are shown in Table 1.

Table 1

| | First dye | | Second dye | | α | β | β/α |
|---|---|---|---|---|---|---|---|
| | Type | Content / mass % | Type | Content / mass % | | | |
| Example 1 | A1 | 98 | B1 | 2 | 0.048 | 0.039 | 0.83 |
| Example 2 | A1 | 97 | B2 | 3 | 0.059 | 0052 | 0.88 |
| Example 3 | A1 | 98 | B1 + B2 | 2 (B1/B2=1/1) | 0.052 | 0.045 | 0.87 |
| Example 4 | A1 + A3 | 99 (A1/A3=88/1 9) | B2 | 1 | 0.056 | 0.041 | 0.70 |
| Example 5 | A1 | 98 | B3 | 2 | 0.069 | 0.063 | 0.92 |
| Example 6 | A1 | 98 | B4 | 2 | 0.058 | 0.050 | 0.85 |
| Example 7 | A1 | 98 | B5 | 2 | 0.061 | 0.055 | 0.90 |
| Example 8 | A1 | 98 | B6 | 1.5 | 0.065 | 0.056 | 0.87 |
| Example 9 | A1 | 99 | B4 | 1 | 0.059 | 0.046 | 0.77 |
| Example 10 | A1 +A3 | 98 (A1/A3=88/10) | B1 + B2 | 2 (B1/B2=1/1) | 0.065 | 0.050 | 0.72 |
| Comparative Example 1 | A1 | 100 | None | None | 0.025 | 0.017 | 0.67 |
| Comparative Example 2 | A1 + A3 | 100 (A1/A3=80/20) | None | None | 0.036 | 0.022 | 0.60 |
| Comparative Example 3 | A1 +A4 | 100 (A1/A4=70/30) | None | None | 0.049 | 0.023 | 0.47 |
| Comparative Example 4 | A1 + A5 | 100 (A1/A5=70/30) | None | None | 0.046 | 0.022 | 0.48 |
| Comparative Example 5 | A1 + A6 | 100 (A1/A6=60/40) | None | None | 0.042 | 0.028 | 0.66 |

[Evaluation test of recording properties]

Information optical recording was carried out on optical recording media of the example 1 to 10, and the comparative examples 1 to 5 in the following manner, and recording properties were evaluated based on the DVD-R standard (Ver. 2.0).

First, information was recorded on the optical recording media of the examples and the comparative examples by using a laser beam of an oscillation wavelength 656 nm and a laser beam of an oscillation wavelength 670 nm. As recorders, an optical disk evaluation device (product name: "DDU-1000", by Pulstech Inc., oscillation wavelength: 656 nm, NA 0.60) and an optical disk evaluation device (product name: "DDU-1000", Pulsetech Inc., oscillation wavelength: 670 nm, NA 0.65) were used. Recording on a recording layer by using each laser was carried out by setting a linear velocity to 3.49 m/s, and gradually increasing recording laser power of a laser pickup.

Subsequently, the recorded information was reproduced from the optical recording media of the examples and the comparative examples by using a laser beam of an oscillation wavelength 650 nm. As recorders, an optical disk evaluation device (product name: "DDU-1000", Pulsetech Inc., oscillation wavelength: 650 nm, NA 0.60) was used. The reproduction of the recorded information was carried out at a linear velocity of 3.49 m/s.

Then, jitters were measured, the following evaluation criteria were set based on the minimum value of an obtained jitter, and recording properties were evaluated for the optical recording media of the examples 1 to 10 and the comparative examples 1 t0 5. Table 2 shows the obtained results.

<Jitter>

3: Jitter minimum value is equal to/less than 10% during reproduction,
2: Jitter minimum value is more than 10% but equal to/less than 11% during reproduction, and
1: Jitter minimum value is more than 11% during reproduction.

<Recording sensitivity>

2: Recording power at jitter minimum value during reproduction is equal to/less than 11 mW, and
1: Recording power at jitter minimum value during reproduction is more than 11 mW.

Table 2

| | 656 nm recording | | 670 nm recording | |
|---|---|---|---|---|
| | Jitter | Recording sensitivity | Jitter | Recording sensitivity |
| Example 1 | 3 | 2 | 3 | 2 |
| Example 2 | 3 | 2 | 2 | 2 |
| Example 3 | 3 | 2 | 3 | 2 |
| Example 4 | 2 | 2 | 2 | 2 |
| Example 5 | 3 | 2 | 2 | 2 |
| Example 6 | 3 | 2 | 2 | 2 |
| Example 7 | 3 | 2 | 2 | 2 |
| Example 8 | 3 | 2 | 3 | 2 |
| Example 9 | 3 | 2 | 3 | 2 |
| Example 10 | 3 | 2 | 2 | 2 |
| Comparative Example 1 | 3 | 2 | 1 | 1 |
| Comparative Example 2 | 3 | 2 | 1 | 1 |
| Comparative Example 3 | 2 | 2 | 1 | 1 |

Table 2 (continued)

| | 656 nm recording | | 670 nm recording | |
|---|---|---|---|---|
| | Jitter | Recording sensitivity | Jitter | Recording sensitivity |
| Comparative Example 4 | 2 | 2 | 2 | 1 |
| Comparative Example 5 | 2 | 2 | 1 | 2 |

As obvious from the results of the tables 1 and 2, it was verified that the optical recording media of the examples 1 to 10 enabled good recording properties (recording sensitivity) to be obtained in both of oscillation wavelengths 656 nm and 676 nm of laser beams during information recording.

On the other hand, it was verified that the optical recording media of the comparative examples 1 to 5 enabled information recording to be carried out relatively well on a short wavelength side (656 nm) of an oscillation wavelength but not on a long wavelength side (670 nm) of an oscillation wavelength.

That is, in the case of the optical media of the examples 1 to 10 where the content of the second dye was adjusted to simultaneously satisfy the conditions represented by the equations (1) to (3), it was verified that information was well carried out in the area of a relatively long wavelength side of the oscillation wavelength of a recording/reproducing light.

Moreover, Fig. 5 is a graph showing a relation between a wavelength of a light radiated to a recording layer of each of the optical media of the example 3 and the comparative example 1, and an attenuation coefficient of the recording layer. Additionally, Fig. 5 is a graph showing in expansion a wavelength area of 650 to 770 nm of the graph of Fig. 4. In the case of the recording layer of the optical recording medium of the comparative example 1, it was verified that an attenuation coefficient had negative inclination where it was reduced from the short wavelength side to the long wavelength side, and the value thereof was about 0.03 or lower in a wavelength area of about 650 to 770 nm. On the other hand, in the case of the recording layer of the optical recording medium of the example 3 which exhibited good recording properties as described above, it was verified that a reduction in the attenuation coefficient in the wavelength area about 650 to 770 nm observed in the optical recording medium of the comparative example 1 was lowered, and a value of an attenuation coefficient in the wavelength area was 0.04 or higher.

As described above, according to the optical recording medium of the present invention, it is possible to obtain excellent recording properties with respect to a light of a relatively wide wavelength area (especially in a wavelength range of 650 to 680 nm), and to carry out information recording well even if a wavelength of a recording light is deviated from the standardized value (650 nm) (especially if a wavelength is deviated to the long side range of 655 to 680 nm).

## Claims

**1.** An optical recording medium including at least a substrate and a recording layer arranged on the substrate, wherein

said recording layer contains at least a first dye which is a main component of the recording layer, and which has a maximum absorption wavelength in a range of 450 to 600 nm, and a second dye which has a maximum absorption wavelength in a range of 600 to 750 nm, and

a content of said second dye in said recording layer is adjusted so as to simultaneously satisfy conditions represented by the following equations (1) to (3):

$$(1)\ 0.03 \leq \alpha,$$

$$(2)\ 0.03 \leq \beta,$$

and

$$(3)\ 0.7 \leq (\beta/\alpha) \leq 1.05,$$

where $\alpha$ denotes an attenuation coefficient of said recording layer with respect to a light of a wavelength 655 nm, and $\beta$ denotes an attenuation coefficient of said recording layer with respect to a light of a wavelength 670 nm.

**2.** An optical recording medium according to claim 1, wherein said recording layer has an attenuation coefficient of 0.03 to 0.1 with respect to a light of a wavelength in a range of 655 to 670 nm.

**3.** An optical recording medium according to claim 1, wherein said first dye has a maximum absorption wavelength in a range of 450 to 600 nm, and an attenuation coefficient is equal to or more than 0.7 with respect to a light of said maximum absorption wavelength.

**4.** An optical recording medium according to claim 1, wherein said first dye has an attenuation coefficient equal to/less than 0.03 with respect to a light of a wavelength 680 nm.

**5.** An optical recording medium according to claim 1, wherein said second dye has a maximum absorption wavelength in a range of 600 to 750 nm, and an attenuation coefficient is equal to or more than 0.5 with respect to a light of a wavelength used for information recording.

**6.** An optical recording medium according to claim 5, wherein said second dye has an attenuation coefficient equal to or more than 0.5 with respect to a light of a wavelength in a range of 650 to 680 nm.

**7.** An optical recording medium according to claim 1, wherein the content of said second dye in said recording layer is equal to/less than 10 mass% of total mass of the recording layer.

**8.** An optical recording medium according to claim 1, wherein a thickness of said recording layer is set in a range of 30 to 300 nm.

**9.** An optical recording medium according to claim 1, wherein said first dye has at least a coordination center made of a metal or a metal ion, and a ligand represented by the following general formula (I):

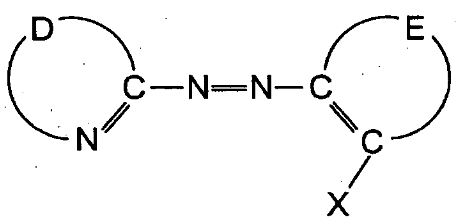

···(I)

where, D denotes a divalent residue bonded to a nitrogen atom and a carbon atom bonded to the nitrogen atom to form a heterocycle or a condensed ring including the heterocycle,
E denotes a divalent residue bonded to two carbon atoms bonded to each other to form a condensed ring,
X denotes a hydroxyl group, a carboxyl group, a sulfonic acid group, a sulfonic acid derivative group, or a characteristic group represented by $-NSO_2Q$, and
Q in the characteristic group denotes a $C_1$ to $C_6$ alkyl group in which at least one hydrogen atom may be substituted by a halogen atom.

**10.** An optical recording medium according to claim 1, wherein the second dye is a cyanine dye represented by the following formula (II):

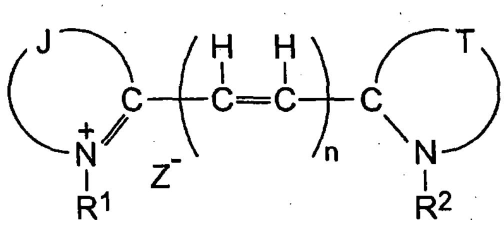

···(II)

where J denotes a divalent residue bonded to a nitrogen atom and a carbon atom bonded to the nitrogen atom to form a condensed ring,
T denotes a divalent residue bonded to a nitrogen atom and a carbon atom bonded to the nitrogen atom to form a condensed ring,
where J and T may be similar or different,
$R^1$ and $R^2$ may be similar or different, and each thereof independently denotes a $C_1$ to $C_6$ alkyl group in which at least one hydrogen atom may be substituted by another substituent, or a $C_1$ to $C_6$ alkenyl group in which at least one hydrogen atom may be substituted by another substituent,
Z denotes an atom or an atomic group to form a monovalent anion, and
n denotes an integer of 2 or 3.

**11.** An optical recording medium according to claim 1, wherein a reflective layer having higher reflectance with respect to the light than the reflectance of said recording layer is further formed on the recording layer.

**12.** An optical recording medium according to claim 1, wherein a light used for recording information on said recording layer is a laser beam which has an oscillation wavelength in a range of 655 to 680 nm.

***Fig.1***

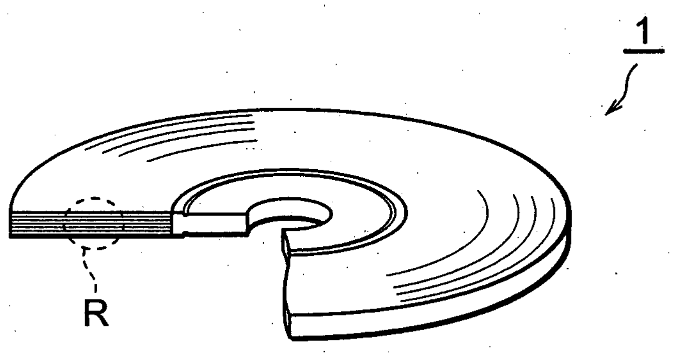

Fig.2

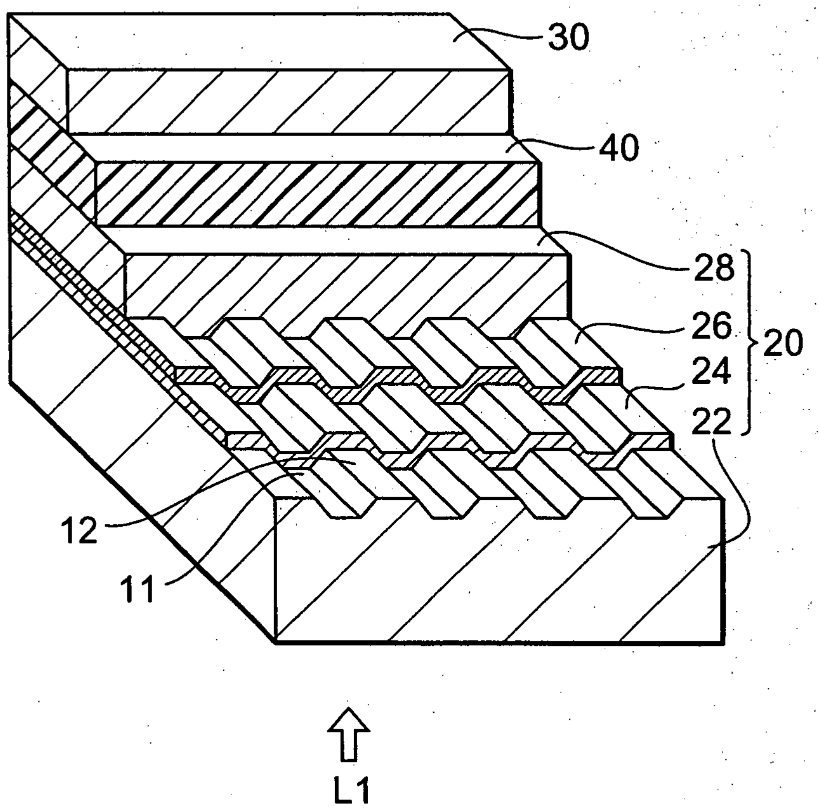

Fig.3

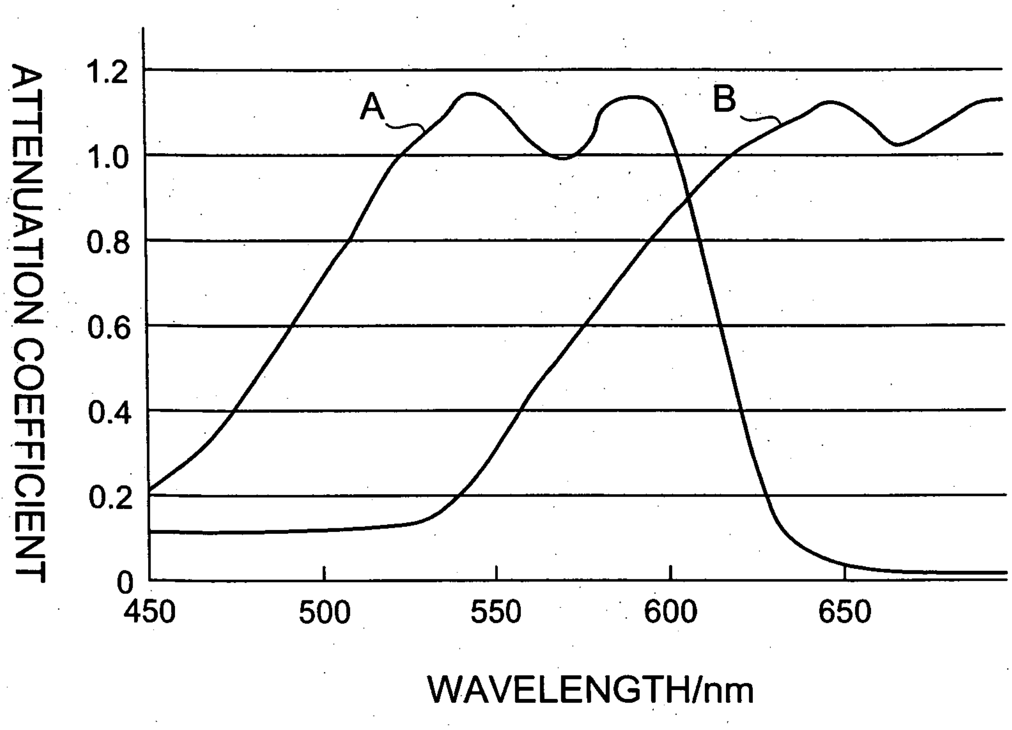
ATTENUATION COEFFICIENT
1.2
1.0
0.8
0.6
0.4
0.2
0
450
500
550
600
650
WAVELENGTH/nm
A
B

*Fig.4*

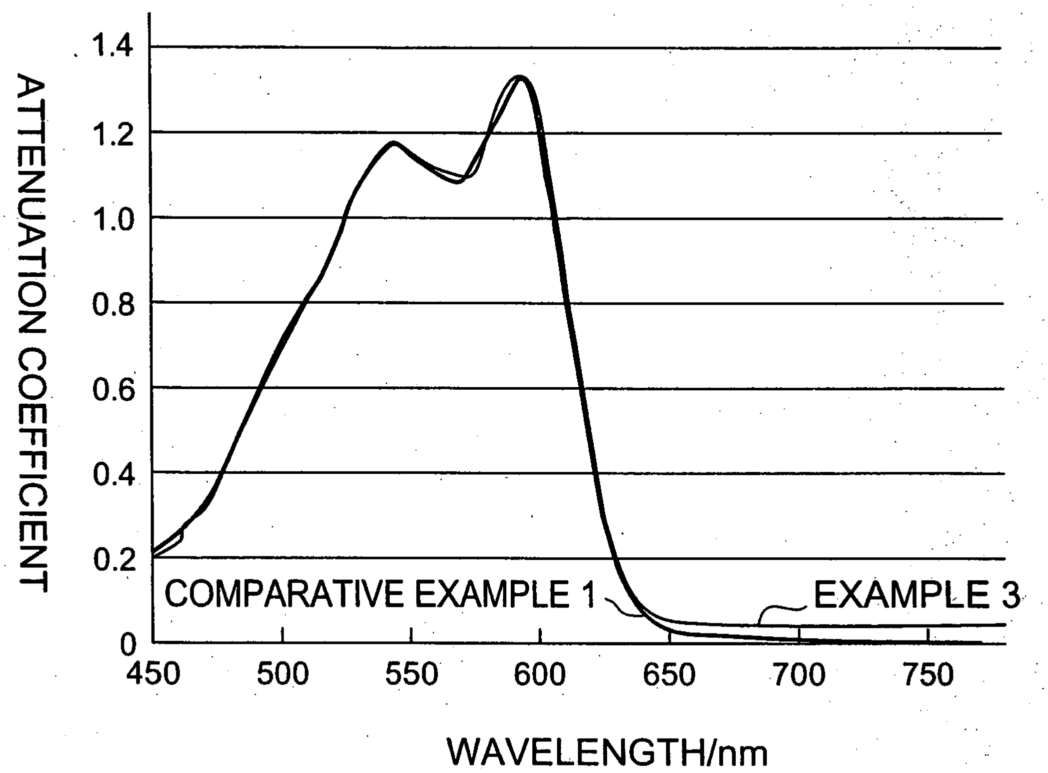
1.4
1.2
1.0
0.8
0.6
0.4
0.2
0
ATTENUATION COEFFICIENT
COMPARATIVE EXAMPLE 1
EXAMPLE 3
450
500
550
600
650
700
750
WAVELENGTH/nm

Fig.5

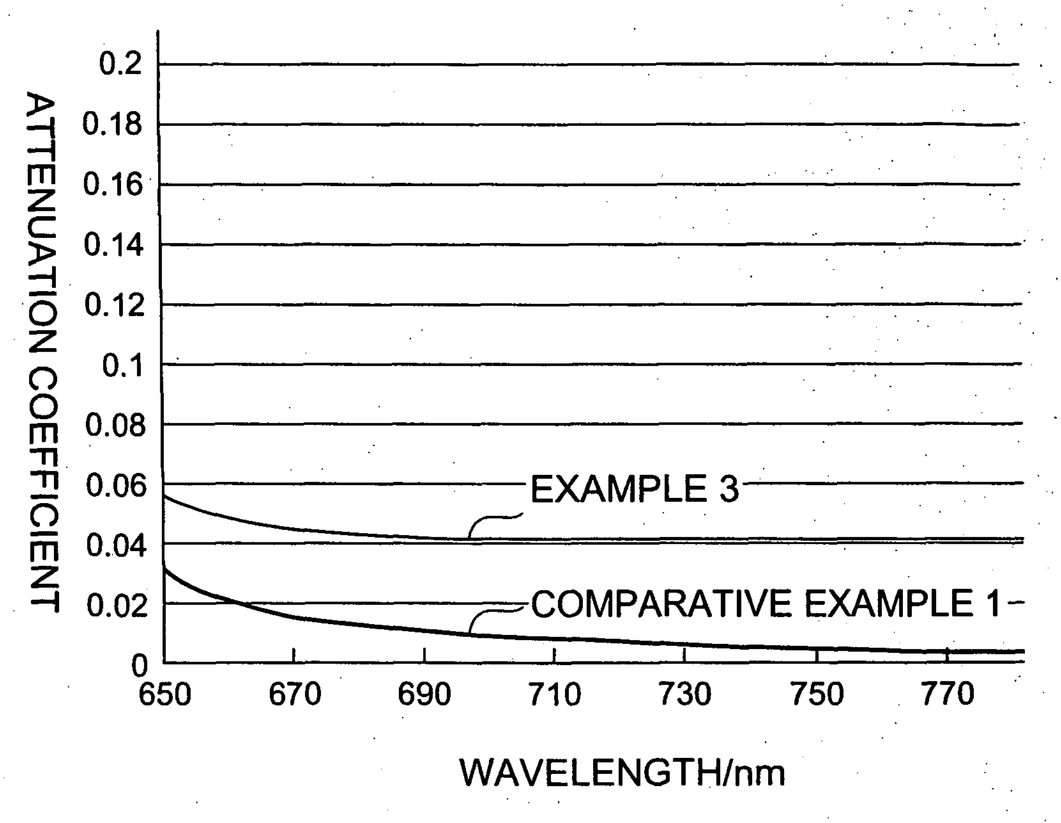
ATTENUATION COEFFICIENT
0.2
0.18
0.16
0.14
0.12
0.1
0.08
0.06
0.04
0.02
0
EXAMPLE 3
COMPARATIVE EXAMPLE 1
650
670
690
710
730
750
770
WAVELENGTH/nm